# EUROPEAN PATENT SPECIFICATION

(11) **EP 4 328 102 B1**
(45) Date of publication and mention of the grant of the patent: **07.01.2026**
(21) Application number: 22191386.6
(22) Date of filing: 22.08.2022
(51) Int. Cl.: B60T 13/26

(54) **BRAKING SYSTEM, VEHICLE COMBINATION AND METHOD OF OPERATING THE SAME**
BREMSSYSTEM, FAHRZEUGKOMBINATION UND VERFAHREN ZUM BETREIBEN DERSELBEN
SYSTÈME DE FREINAGE, COMBINAISON DE VÉHICULE ET SON PROCÉDÉ DE FONCTIONNEMENT

(43) Date of publication of application: 28.02.2024
(73) Proprietor: KNORR-BREMSE Systeme für Nutzfahrzeuge GmbH, 80809 München (DE)
(72) Inventor: DÖME, Csongor, 80809 Munich (DE); KOVACS, Tamas, 2314 Halásztelek (HU)

(56) References cited:
- CN-A- 108 501 922
- US-A- 5 190 357
- US-A1- 2006 076 823

## Description

The present invention refers to a braking system, in particular for a trailer-vehicle combination, a vehicle combination, in particular a truck-trailer combination, and a method for operating the same.

The today well known and widely applicated park brake chambers are kept in disengaged position via a dedicated pressurized air circuit through the air supply system. If this pressurization is not possible due to a mechanical failure somewhere in the pressurized air circuit, the park brake is being applied, causing brake force on the wheels which are equipped with park brake chambers.

Furthermore, the trailer pressure control line can also be supplied from the same pressurized air circuit. The behavior is the same as in the previously mentioned situation because the trailer brake control is working in such a way that in case the trailer control line is pressurized, there is no brake force, and the brake force is proportional to a (potentially occurring) decrease of pressure in the trailer control line.

In conventional systems, a so called redundant backup piping is provided via pneumatic elements by which the mentioned park brake chambers and trailer control line can be pressurized from another pressurized air circuit to avoid park brake / trailer brake application in case of a loss of pressure.

For example, considering the prior art, US 2006/076823 A1 provides a brake system for a tractor-trailer vehicle including a service brake system and a park brake system. The service and park brake systems are used to brake both a tractor and a trailer towed by the tractor.

CN 108 501 922 A describes a pneumatic electronic parking system including an electronic control unit and a parking brake module for receiving a control signal of an electronic control unit.

US 5,190,357 A refers to an air-actuated brake system for vehicles as well as separate primary and secondary sources of air under pressure that are connected to brake assemblies as to apply either the service or park brakes even though air is lost from one of the sources.

Considering today's electronic parking brake systems (EPB), if there is a pneumatic line defect between the EPB and the parking brake chambers, the park brake cannot be released, or if this defect occurs during driving, the parking brake cannot be kept released.

In particular, if pressurized air is lost from the park brake the trailer control line brake force is applied on the wheels. The more the pressure is decreasing, the higher the brake force increases, even up to a complete blockage of the wheel(s).

Once a wheel is blocked, no lateral tire force can be realized on the ground resulting in a complete loss of controllability of the vehicle, leading to potential life threatening situations, besides the possibility of a (costly) damage of property. To determine the point when the wheel blocking becomes critical is nearly impossible, due to several unknown or fast changing variable(s) such as e.g. the vehicle being loaded or empty, the road conditions (dry asphalt, slippery wet/icy asphalt), driver routine, etc.

On the other hand, if the park brake is engaged and, due to the damaged pressurized air circuit, it cannot be disengaged, the vehicle is simply fixed in a standstill. Such braking/standstill situation can lead to dangerous situations like in heavy traffic or on a railway crossing.

According to the state of the art a second pressure supply for the park brake chambers, supplied from a different circuit then the park brake, is provided in order to minimize/avoid such critical situations. In this context, one way of implementation according to the state of the art is to connect the mentioned different pressure supply circuits to the parking brake chambers with a switchable solenoid which is controlled by an electronic control unit (ECU).

If this ECU detects the (pre-defined) activation conditions - e.g. a pressure breakdown during driving or an attempt to release the parking brake lasting too long without such release occuring - the ECU activates the solenoid and air is supplied to the park brake chambers via the different/secondary pressure circuit. This function is known as "Pipe Fracture Protection" (PFP; in German: Rohrbruchsicherung).

However, if any of the above-mentioned situations happens, with the layout of the park brake system according to the state of the art, the trailer control line will not be supplied properly, but there could be significant brake force on the trailer. Today's short-term solution for such a situation is to disconnect the (usually yellow) coupling head as well as to release the trailer brakes manually.

Besides that providing a redundant backup piping, in accordance with the state of the art, increases the build cost of a truck, whereby also the specific reaction time depends on several circumstances. Thereby, the behaviour of a purely pneumatic backup system can also depend on environmental conditions.

It is an object of the present invention to provide a braking system, in particular for a trailer-vehicle combination, which is capable of providing a backup functionality, e.g. in case of a leakage, a brake pipe burst/break or the like, but also reduces costs and allows for improved behaviour under different (environmental) circumstances, in particular by utilizing a second source of pressure fluid being connectable on a temporarily basis and as needed. Moreover, it is an object of the invention to provide a vehicle combination as well as a method for operating the braking system and/or the vehicle combination.

This object is solved by a braking system according to independent claim 1 as well as a vehicle combination according to claim 8 and a method for operating of such braking system and/or trailer-vehicle combination according to independent claim 9. Moreover, preferred embodiments are provided in the dependent claims respectively.

According to the present invention a braking system for a trailer-vehicle combination, in particular for an electronic park brake control (EPBC) system or a global scalable air treatment (GSAT) system of a trailer-vehicle combination, is provided with at least one truck park brake chamber, at least one truck park brake supply port, at least one secondary supply port, at least one secondary supply valve and at least one control valve, preferably a select high valve. The control valve comprises a fluid connection to the at least one truck park brake chamber, the at least one secondary supply valve and the truck park brake supply port, wherein the at least one secondary supply valve comprises a fluid connection to the secondary supply port and to the control valve. The at least one secondary supply valve comprises a fluid connection to the at least one truck park brake chamber via the control valve such that the at least one truck park brake chamber can be provided with pressure fluid via the truck park brake supply port and/or the secondary supply port, preferably to allow for pressure fluid to be provided from a primary pressure fluid source via the truck park brake supply port and/or from a secondary pressure fluid source via the secondary supply port to the at least one truck park brake chamber.

The invention is based on the idea to combine two functions of a braking system, like e.g. an EPBC system.

Firstly, in case the brake system detects that the park brake cannot be released, it will actuate the secondary supply valve to supply the truck parking brake chambers with pressure fluid via the secondary supply port and in parallel can (automatically) execute the trailer control line inflation for releasing the trailer service brake, without an attempt to release the truck/tractor's parking brake. By these measures the vehicle combination can be mobilized.

Secondly, if the EPBC system detects the pressure breakdown of the park brake chambers during driving it can actuate the secondary supply valve to supply the park brake chambers as well as it can, in parallel, automatically activate the trailer control line inflation, thereby keeping the vehicle combination mobilized.

Moreover, by the present invention the so-called ECE 13 regulation can be met, which defines that the whole vehicle combination must be kept standstill just by the towing vehicle's/tractor's/truck's parking brake when a vehicle combination (e.g. tractor-trailer) is parked. To check the compliance with respect to this ECE 13 regulation, the vehicle combination has to have a function where only the trailer service brakes are released, but the tractor's/towing vehicle's parking brake is kept parked/in braking mode. Such situation is realized by inflation of the trailer control line.

The braking system according to the present invention can be applied for/with and/or in the context of, in particular as a part of, an EPBC or a GSAT.

By the at least one secondary supply valve comprising a fluid connection to the secondary supply port and to the control valve it is possible to inflate the truck's/tractor's parking brake (chamber) with pressure fluid either via the truck/tractor park brake supply port or, in particular as a backup option in case of e.g. a pipe burst/breakage, via the secondary supply port.

According to the present invention the control valve can be an actively and/or a passively controlled valve. Preferably, the control valve can be a (passive) select high valve.

In particular, the control valve can allow for pressure fluid (or in other words also pressure medium) being fed to the truck park brake chamber from the truck park brake supply port or the secondary supply port.

Alternatively, the control valve can allow for proportional feeding according to the fluid pressure being applied at the truck park brake supply port and the secondary supply port respectively.

Moreover, the braking system is preferably configured to be used with air or any other suitable gas as an operational fluid, in particular compressed air. Hence, the braking system can preferably be provided as a pneumatic braking system.

According to one preferred embodiment the truck park brake supply port and the secondary supply port are capable of providing pressure fluid to the park brake chamber from different, in particular redundant, sources of pressure fluid, preferably from a primary pressure fluid source and a secondary pressure fluid source.

In particular, by the secondary supply port a secondary source of pressure fluid, independent from the truck park brake supply port, can be utilized, which is provided by the usual infrastructure, e.g. of a GSAT or an EPBC.

Hence, no additional pressure fluid source or any extensive piping has to be provided. Rather, by the secondary supply valve a simple and cost-efficient backup supply via the secondary supply port can be provided.

In another embodiment of the invention the braking system further comprises a trailer control line port, for providing pressure fluid to a trailer service brake, and at least one truck-trailer valve, preferably at least one truck-trailer solenoid valve, whereby a fluid connection between a primary pressure fluid source, the truck park brake supply port and/or the trailer control line port is providable via the at least one truck-trailer valve such that at least a (comparable) fluid pressure, preferably the same fluid pressure, can be applied/is applicable at the trailer control line port or at the truck park brake supply port or at both of them simultaneously.

With the trailer control line port a trailer service break can be controlled, i.e. released, by applying fluid pressure accordingly.

In particular, the truck-trailer can be utilized to allow for a fluid pressure as provided at the truck park brake supply port to be also or instead available at the trailer control line port.

Moreover, the at least one truck-trailer valve can connect the trailer control line port to a pressure fluid source.

Namely, by the at least one truck-trailer valve a fluid connection to the primary pressure fluid source of the braking system can be connected to either the truck park brake supply port, the trailer control line port, to both of them or to none of them.

In this context, the truck-trailer valve can be implemented in form of a single (solenoid) valve or in form of multiple (solenoid) valves in order to allow for appropriate switching of fluid connections.

Thereby the trailer's service brake can be released in an efficient manner.

According to one embodiment the at least one secondary supply valve is provided as a solenoid valve, in particular as a spring-loaded solenoid valve, wherein the at least one secondary supply valve in its deactivated/unswitched/pre-set/spring-loaded state preferably interrupts fluid connection between the secondary supply port and the control valve.

Hence, the usual operation of the braking system allows for a fluid pressure being applied from the truck park brake supply port via the control valve to the truck park brake (chamber(s)).

In case of e.g. a brake pipe burst/breakage or a leakage and a corresponding loss/decrease of fluid pressure along such usual supply line, the secondary supply valve can provide for a fluid connection between the secondary supply port and the control valve such that truck park brake (chamber(s)) can be supplied with sufficient pressure fluid to allow for an operation of the truck's parking brake.

Preferably, the secondary supply valve is a solenoid valve in order to allow a control of the secondary supply valve by a control unit of the braking system and/or the vehicle combination.

In another preferred embodiment the braking system comprises a sensor unit for detection of a fluid pressure in the fluid connection between the truck park brake supply port and the control valve.

Such sensor unit can be provided as a specific pressure sensor for measuring the fluid pressure.

Alternatively, various different methods can be applied in order to directly or indirectly determine a fluid pressure and/or a fluid pressure loss between the truck park brake supply port and the high select valve of the braking system.

Pursuant to a further embodiment of the invention the secondary supply valve is provided as an external valve, in particular to be controlled via an analogue control connection, or provided as an integral part of the braking system, in particular as an integral part of an electronic park brake control system or of a global scalable air treatment system.

In particular, the implementation of the secondary supply valve can be provided in various manners, e.g. it can be integrated into the truck system itself, with e.g. a EPBC system only actuating the secondary supply valve via analogue electrical connection. Alternatively, the braking system, in particular the secondary supply valve, can also be directly implemented as an integral part of an EPBC or a GSAT.

In another preferred embodiment the secondary supply port is a trailer tank supply port and/or comprises a fluid connection to a trailer tank as a secondary pressure fluid source.

Hence, the secondary supply port and the secondary supply valve can provide a second source of pressure fluid, independent from the truck park brake supply port and its pressure fluid supply.

According to another aspect, the invention refers to a vehicle combination, in particular a truck-trailer combination, with a braking system according to the present invention. Hence, the braking system, in particular the implementation of the secondary supply valve, can be provided as an integral or an external part of the truck/tractor of such vehicle combination or as a part of the EPBC or GSAT, or the like.

In a further aspect, the present invention refers to a method for operating a braking system and/or a vehicle combination with a braking system, in particular a braking system and/or a vehicle combination according to the present invention, comprising the following steps:
- checking the fluid pressure between the truck park brake supply port and the control valve;
- detecting a fluid leakage, in particular a loss of fluid pressure below a predeterminable threshold value, between the truck park brake supply port and the control valve;
- switching, in particular activating, the at least one secondary supply valve such that a fluid connection between the secondary supply port and the control valve is provided;
whereby pressure fluid can be provided via the secondary supply port of the braking system via the control valve to the truck park brake chamber(s).

Hence, the (backup) supply of pressure fluid via the secondary supply valve/secondary supply port can be provided on a temporarily basis and as needed, based on a determined leakage.

Preferably the method is considered to be executed with/by a braking system using air as an operating fluid, in particular compressed air.

The control valve hereby ensures that the higher fluid pressure applied either at the truck park brake supply port or via the (activated/connected) secondary supply valve can provide/feed sufficient pressure fluid to the truck park brake chamber(s). According to one preferred embodiment the step of checking the fluid pressure is at least executed when pressure fluid is provided to the truck park brake supply port, preferably at least once or on a regular timely basis.

In particular, by a regular check of the fluid pressure a fluid pressure leakage between the truck park brake supply port and the control valve can be determined.

Preferably the braking system can comprise a control unit for analyzing and/or processing measurements, e.g. by the sensor unit. Moreover, the control unit can be provided to control and/or regulate valves, like the secondary supply valve and/or the truck-trailer valve, in a suitable manner.

Moreover, a braking system and/or a vehicle combination according to the present invention is preferably considered to be configured to allow the execution of a method according to the present invention.

In a further embodiment the truck-trailer valve is switched, subsequently or simultaneously to the switching of the at least one secondary supply valve, such that a fluid connection between the primary pressure fluid source, the truck park brake supply port and/or trailer control line port is established in order to provide a fluid pressure to the trailer control line port, in particular to release a trailer service brake.

In particular, by the at least one truck-trailer valve the truck park brake supply port can be disconnected from the primary pressure fluid source of the braking system to avoid unnecessary loss of pressure fluid via the leakage/ruptured/broken fluid connection. Instead, only the trailer control line port can be connected with the primary pressure fluid supply in order to allow for a suitable handling of the trailer service brakes.

Thus, in particular in case of the secondary supply valve providing a fluid connection to supply pressure fluid to the truck park brake chamber(s), the trailer control line can be fed with pressure fluid to allow for an independent, at least partial, release of the trailer service brake.

According to another embodiment the secondary supply valve is switched, preferably activated, to provide a fluid connection between the secondary supply port and the truck park brake chamber via the control valve when
- when a fluid pressure between the truck park brake supply port and the control valve is lower than a predeterminable threshold value, in particular below a contact pressure threshold, or
- when a predeterminable threshold value of fluid pressure is not providable within a predeterminable time range.

Hence, in case of a leakage or a (sudden) burst/breakage of fluid connection between the truck park brake supply port and the control valve a sufficient and appropriate pressure fluid supply can be ensured via switching of the secondary supply valve to provide pressure fluid from the secondary supply port via the control valve to the truck park brake chamber(s).

For example, in case of an EPBC an EPB detection routine can check whether there is an implausible high negative gradient on the truck's park brake chamber pressure, e.g. in case of a sudden pipe breaking, or whether this pressure simply falls short a certain threshold. A precondition for such routine can be that the truck's parking brake is released.

The pre-determinable threshold can be a so-called contact pressure threshold which means that the brake pads are in contact with the brake disc/drum and that a brake force can be present/provided.

Alternatively, another EPBC detection routine can occur when the truck's park brake is in parked position (engaged). With an intact system, there is a well-defined timeout within which the parking brake chamber pressure has to reach the released pressure threshold (assuming that there is enough supply pressure to reach this pressure threshold).

In this case, the EPBC's detection routine can start a counter when a request to release the truck's park brake is received. The counter can be compared to a pre-defined threshold. This comparison either results in a failed release attempt or is terminated when the target pressure threshold is reached within the pre-definable timeout.

Hence, an advantageous control and/or regulation for checking of the regular operation of the braking system can be provided.

In another embodiment, the predeterminable threshold value of fluid pressure is about 8 bar.

In particular, if the trailer control line port is pressurized to more than eight (8) bar, there is no brake force on the trailer service break. However, if the pressure is decreased on the trailer control line (port) down to zero (0) bar, proportional to it, brake force is present on the trailer service brakes.

All of the structural and functional features as described above in the context of the braking system according to the present invention as well as its embodiments can be considered for or applied/used, alone or in combination with each other, for a method according to the present invention in order to achieve the advantages being associated therewith respectively.

Further details and advantages of the invention will be described and outlined in the following with respect to embodiments as illustrated in the enclosed figures.

It is shown:
Fig. 1 a schematic illustration of a first embodiment of a braking system; and
Fig. 2 a flow chart of a method for operating a braking system according to Fig. 1.

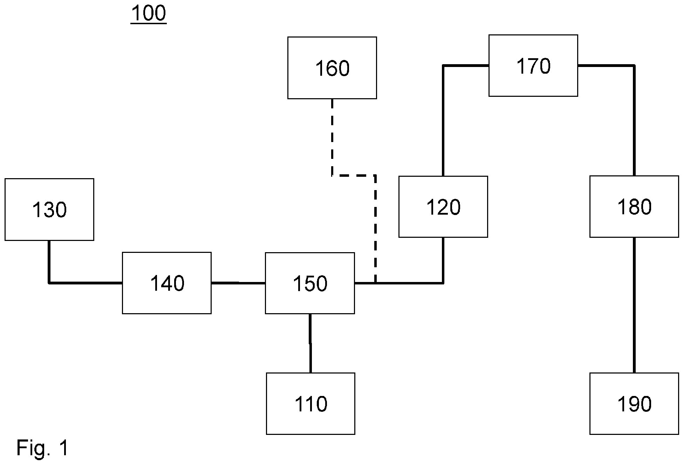

**Fig. 1** shows a schematic illustration of a first embodiment of a braking system 100. The braking system 100 can be provided with at least one truck park brake chamber 110 and a trailer service brake 190.

The truck park brake 110 comprises a fluid connection to the control valve 150. Preferably, the control valve 150 can be a select high valve.

The control valve 150 can comprise a fluid connection to a secondary supply valve 140 and a truck park brake supply port 120.

The secondary supply valve 140 can preferably be provided in form of a solenoid valve. Moreover, the braking system 100 comprises a sensor unit 160 being capable of determining/measuring a fluid pressure between the truck park brake supply port 120 and the control valve 150, in particular to determine a fluid pressure leakage and/or a drop/loss of fluid pressure, e.g. by a (sudden) break/rupture of the fluid connection.

The secondary supply valve 140 comprises a fluid connection with a secondary supply port 130.

The secondary supply port 130 can preferably be connected to a secondary, in particular redundant, pressure fluid source, like e.g. a trailer pressure fluid tank or the like.

The truck park brake supply port 120 comprises a fluid connection to at least one truck-trailer valve 170.

Via the at least one truck-trailer valve 170, a fluid connection from the truck park brake supply port 120 to a trailer control line port 180 of the braking system 100 can be provided, in order to provide at least comparable fluid pressure, or interrupted.

The trailer control line port 180 can be provided with pressure fluid/be inflated in order to control at least one trailer service brake (chamber) 190.

The truck-trailer valve 170 can provide a fluid connection of the truck park brake supply port 120 and/or the trailer control line port 180 with a primary pressure fluid source. The braking system 100 can comprise a control unit being capable of controlling and/or regulating the braking system.

In particular, the control unit can receive data from the sensor unit 160.

Moreover, the control unit can be provided to control and/or regulate the secondary supply valve 140, the at least one trailer-truck valve 170 and/or the control valve 150.

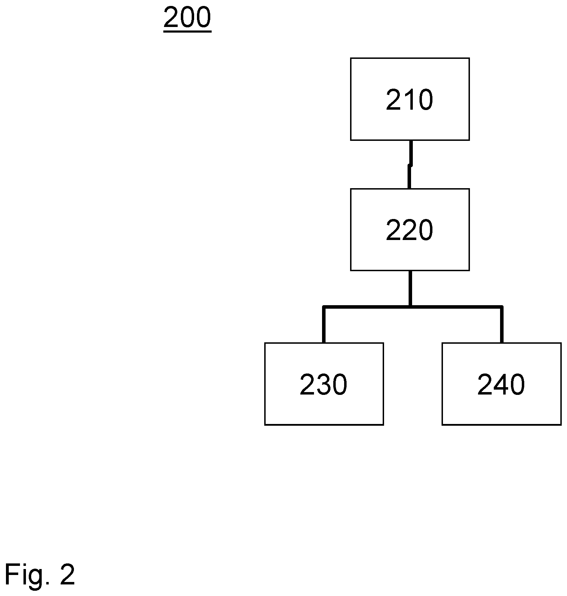

In **Fig. 2** an embodiment of a method 200 for operating a braking system according to Fig. 1 is illustrated in form of a flow chart.

In one step a fluid pressure can be checked/measured/determined 210 between the truck park brake supply port 120 and the control valve 150.

In another step, a fluid leakage can be determined 220 on basis of the fluid pressure, preferably as previously determined.

A fluid leakage can occur either in terms of a break/bust of a fluid connection pipe such that a pressure loss occurs.

Alternatively, a leakage may be determined 220 on basis of a timeout during the attempt to build up a certain fluid pressure in the fluid connection between the truck park brake supply port 120 and the control valve 150.

Preferably, a measurement/determination and/or detection 220 of a fluid leakage can be executed by the sensor unit 160, in particular in combination with a control unit of the braking system 100, e.g. as part of an EPBC or a GSAT.

In a further step, the secondary supply valve 140 can be switched 230 in order to provide a fluid connection between the secondary supply port 130 to the control valve 150.

In case of a leakage between the truck park brake supply port 120 and the control valve 150, the higher fluid pressure being supplied via the secondary supply port 130 can be fed through to the truck park brake (chamber(s)).

Subsequently or simultaneously, the truck-trailer valve 170 can be switched 240 such to allow a fluid pressure being applied on the trailer control line port 180.

In particular, a fluid connection between the truck park brake supply port 120 and the trailer control line port 180 can be interrupted by switching of the at least one trailer-truck valve 170, in order to avoid a loss of fluid pressure due to the leakage between the truck park brake supply port 120 and the control valve 150.

The switching of the truck-trailer valve 240 can further provide a fluid connection between a primary pressure fluid source of the braking system 100 and the trailer control line port 180.

Preferably, a fluid pressure can be applied to the trailer control line port 180 in order to allow for the trailer service breaks 190 to be released.

By the method 200, the vehicle combination, i.e. a truck-trailer combination, having a braking system 100 can be mobilized.

In more detail, the functionality of the braking system 100 can be described as follows: In case a truck is parked, the truck park brake supply 120 port and the trailer control line port 180 can have ambient pressure.

Thereby, the trailer is not parked, but trailer service brakes 190 are actuated, such that moving of the trailer is not possible with rolling wheels.

The driver/user can request the truck park brake 110 to be deactivated (released/disengaged), by pressurizing/providing fluid pressure at the truck park brake supply port 120 and via the control valve 150 to the truck park brake chamber(s) 110.

If a break/rupture/leakage occurs between the truck park brake supply port 120 and the control valve 150 and the break cross section/leakage is large enough, no or only a minimal pressure increase will occur at the truck park brake supply port 120.

By detection of such lack of fluid pressure 210; 220, preferably by the sensor unit 160 in combination with a control unit of the braking system 100, the supply of fluid pressure tp the truck park brake 110, in order to deactivate/release the truck park brake 110, can be stopped.

In a next step, the secondary supply valve 140 can be activated/switched 230 in order to provide a fluid connection from the secondary supply port 130 via the control valve 150 to the truck park brake (chamber(s)) 110 for feeding of pressure fluid and thus pressurizing/inflating the truck park brake (chamber(s)) 110.

The control valve 150 can hereby ensure that the pressure fluid supplied via secondary supply port 130 is forwarded to the truck park brake (chamber(s)) 110.

Preferably, in parallel, or subsequently, the at least one truck-trailer valve 170 can be actuated/switched 240 in order to pressurize the trailer control line port 180, e.g. in parallel, to be able to deactivate trailer service brakes 190.

By switching 240 of the at least one truck-trailer valve 170 also a fluid connection between the primary pressure fluid source of the braking system 100 and/or the trailer control line port 180 to the truck park brake supply port 120 can be interrupted in order to (ongoing) avoid loss of pressure fluid/fluid pressure due to the leakage/pipe breakage.

In consequence, the vehicle combination can be moved to another spot.

In another situation, the vehicle/truck-trailer combination can be driving (at any speed) while a (sudden) break or leakage occurs between the truck park brake supply port 120 and the control valve 150.

As a consequence, a rapid and/or relevant fluid pressure drop occur at the trailer control line port 180 and can be detected 210; 220.

By the truck park brake supply port 120 being connected to the trailer control line port 180 via the truck-trailer valve 170, truck park brakes 110 are going to be actuated as well as the trailer service breaks 190 will also apply brake force due to low pressure on the trailer control line port 180.

In a next step, the secondary supply valve can be switched/activated 230 in order to provide a redundant pressure fluid supply via the secondary supply port 130 to the truck park brake chamber(s) 110.

Subsequently or in parallel, the at least one trailer-truck valve 170 can be actuated 240 in order to pressurize/feed the trailer control line port 180 with pressure fluid, while the truck park brake supply port 120 is disconnected.

If the actuations, in particular of the truck park brake 110 and the trailer service brake 190, are completed, the primary pressure fluid supply for the truck park brake supply port 120 can be switched off as well. At least a fluid connection between the primary pressure fluid supply and the truck park brake supply port 120 can be interrupted by the truck-trailer valve 170.

The truck-trailer combination is mobilized without allowing a further loss of pressure fluid by the damaged or leaking fluid connection.

In summary, the present invention provides a braking system 100 which comprises an efficient approach for a backup fluid pressure supply without the necessity to include extensive infrastructure. Rather, a leakage or a breakage of a fluid connection, in particular between the truck park brake supply port 120 and the control valve 150, can be compensated on basis of a present secondary pressure fluid source, like a trailer tank, and via switching of the secondary supply valve 140.

In consequence, the loss of pressure fluid can be reduced while the truck-trailer/vehicle combination can be mobilized again, by inflation of the truck park brake 110 via the switched secondary supply valve 140 and the independent actuation of trailer service breaks 190 by separate/individual pressurization of the trailer control line port 180.

### REFERENCE NUMERALS

- 100: Braking system
- 110: Truck park brake (chamber(s))
- 120: Truck park brake supply port
- 130: Secondary supply port
- 140: Secondary supply valve
- 150: Control valve/Select high valve
- 160: Sensor unit
- 170: Truck-trailer valve
- 180: Trailer control line port
- 190: Trailer service break (chamber(s))
- 200: Method
- 210: Checking of fluid pressure
- 220: Detecting/Determining a fluid leakage
- 230: Switching secondary supply valve
- 240: Switching truck-trailer valve

## Claims

1. Braking system (100) for a trailer-vehicle combination, in particular for an electronic park brake control system or a global scalable air treatment system of a trailer-vehicle combination,
comprising at least one truck park brake chamber (110), at least one truck park brake supply port (120), at least one secondary supply port (130), at least one secondary supply valve (140) and at least one control valve (150), preferably a select high valve, wherein the control valve (150) comprises a fluid connection to the at least one truck park brake chamber (110), the at least one secondary supply valve (130) and the truck park brake supply port (120),
**characterized in that**
the at least one secondary supply valve (140) comprises a fluid connection to the secondary supply port (130) and to the control valve (150),
wherein the at least one secondary supply valve (140) comprises a fluid connection to the at least one truck park brake chamber (110) via the control valve (150) such that the at least one truck park brake chamber (110) can be provided with pressure fluid via the truck park brake supply port (120) and/or the secondary supply port (130), preferably to allow for pressure fluid to be provided from a primary pressure fluid source via the truck park brake supply port (120) and/or from a secondary pressure fluid source via the secondary supply port (140) to the at least one truck park brake chamber (110).

2. Braking system (100) according to claim 1,
**characterized in that**
the truck park brake supply port (120) and the secondary supply port (130) are capable of providing pressure fluid to the truck park brake chamber (110) from different, in particular redundant, sources of pressure fluid, preferably from a primary pressure fluid source and a secondary pressure fluid source.

3. Braking system (100) according to one of the preceding claims,
**characterized in that**
the braking system (100) further comprises a trailer control line port (180), for providing pressure fluid to a trailer service brake (190), and at least one truck-trailer valve (170), preferably at least one truck-trailer solenoid valve,
wherein a fluid connection between a primary pressure fluid source, the truck park brake supply port (120) and/or the trailer control line port (180) is providable via the at least one truck-trailer valve (170) such that at least a comparable fluid pressure can be applied at the trailer control line port (180) or at the truck park brake supply port (120) or at both of them (120; 180) simultaneously.

4. Braking system (100) according to one of the preceding claims,
**characterized in that**
the at least one secondary supply valve (140) is provided as a solenoid valve, in particular as a spring-loaded solenoid valve,
whereby the at least one secondary supply valve (140) in its deactivated state preferably interrupts fluid connection between the secondary supply port (130) and the control valve (150).

5. Braking system (100) according to one of the preceding claims,
**characterized in that**
the braking system (100) comprises a sensor unit (160) for detection of a fluid pressure in the fluid connection between the truck park brake supply port (120) and the control valve (150).

6. Braking system (100) according to one of the preceding claims,
**characterized in that**
the secondary supply valve (140) is provided as an external valve, in particular to be controlled via an analogue control connection, or provided as an integral part of the braking system (100), in particular as an integral part of an electronic park brake control system or of an global scalable air treatment system.

7. Braking system (100) according to one of the preceding claims,
**characterized in that**
the secondary supply port (130) is a trailer tank supply port and/or comprises a fluid connection to a trailer tank as a secondary pressure fluid source.

8. Vehicle combination, in particular a truck-trailer combination, with a braking system (100) according to one of the preceding claims.

9. Method (200) for operating a braking system (100) and/or a vehicle combination according to one of the preceding claims, comprising the following steps:
- checking (210) the fluid pressure between the truck park brake supply port (120) and the control valve (150);
- detecting (220) a fluid leakage, in particular a loss of fluid pressure below a predeterminable threshold value, between the truck park brake supply port (120) and the control valve (150);
- switching (230), in particular activating, the at least one secondary supply valve (140) such that a fluid connection between the secondary supply port (130) and the control valve (150) is provided;
wherein pressure fluid can be provided from the secondary supply port (130) of the braking system (100) via the control valve (150) to the truck park brake chamber (110).

10. Method (200) according to claim 9,
**characterized in that**
the step of checking (210) the fluid pressure is at least executed when pressure fluid is provided to the truck park brake supply port (120).

11. Method (200) according to claim 9 or 10,
**characterized in that**
the truck-trailer valve (170) is switched (240), subsequently or simultaneously to the switching (230) of the at least one secondary supply valve (140), such that a fluid connection between the primary pressure fluid source, the truck park brake supply port (120) and/or trailer control line port (180) is established in order to provide a fluid pressure to the trailer control line port (180), in particular to release a trailer service brake (190).

12. Method (200) according to one of claims 9 to 11,
**characterized in that**
the secondary supply valve (140) is switched, preferably activated, to provide a fluid connection between the secondary supply port (130) and the truck park brake chamber (110) via the control valve (150) when
- when a fluid pressure between the truck park brake supply port (120) and the control valve (150) is lower than a predeterminable threshold value, in particular below a contact pressure threshold, or
- when a predeterminable threshold value of fluid pressure is not providable within a predeterminable time range.

13. Method (200) according to claim 9 to 12,
**characterized in that**
the predeterminable threshold value of fluid pressure is about 8 bar.

## Patentansprüche

1. Bremssystem (100) für eine Anhänger-Fahrzeugkombination, insbesondere für ein elektronisches Feststellbremsen-Steuersystem oder ein global skalierbares Luftaufbereitungssystem einer Anhänger-Fahrzeugkombination,
umfassend mindestens eine LKW-Feststellbremskammer (110), mindestens einen LKW-Feststellbremsen-Versorgungsanschluss (120), mindestens einen Sekundärversorgungsanschluss (130), mindestens ein Sekundärversorgungsventil (140) und mindestens ein Steuerventil (150), bevorzugt ein Select-High-Ventil,
wobei das Steuerventil (150) eine Fluidverbindung zu der mindestens einen LKW-Feststellbremskammer (110), dem mindestens einen Sekundärversorgungsventil (130) und dem LKW-Feststellbremsen-Versorgungsanschluss (120) umfasst,
**dadurch gekennzeichnet, dass**
das mindestens eine Sekundärversorgungsventil (140) eine Fluidverbindung zum Sekundärversorgungsanschluss (130) und zum Steuerventil (150) umfasst,
wobei das mindestens eine Sekundärversorgungsventil (140) über das Steuerventil (150) eine Fluidverbindung mit der mindestens einen LKW-Feststellbremskammer (110) umfasst, sodass der mindestens einen LKW-Feststellbremskammer (110) über den LKW-Feststellbremsen-Versorgungsanschluss (120) und/oder den Sekundärversorgungsanschluss (130) Druckfluid bereitgestellt werden kann, bevorzugt um zu erlauben, dass der mindestens einen LKW-Feststellbremskammer (110) Druckfluid aus einer primären Druckfluidquelle über den LKW-Feststellbremsen-Versorgungsanschluss (120) und/oder von einer sekundären Druckfluidquelle über den Sekundärversorgungsanschluss (140) bereitgestellt wird.

2. Bremssystem (100) nach Anspruch 1,
**dadurch gekennzeichnet, dass**
der LKW-Feststellbremsversorgungsanschluss (120) und der Sekundärversorgungsanschluss (130) in der Lage sind, der LKW-Feststellbremskammer (110) Druckfluid aus unterschiedlichen, insbesondere redundanten Druckfluidquellen, bevorzugt aus einer primären Druckfluidquelle und einer sekundären Druckfluidquelle, bereitzustellen.

3. Bremssystem (100) nach einem der vorstehenden Ansprüche,
**dadurch gekennzeichnet, dass**
das Bremssystem (100) weiter einen Anhänger-Steuerleitungsanschluss (180) zum Bereitstellen von Druckfluid an eine Anhänger-Betriebsbremse (190) und mindestens ein LKW-Anhängerventil (170), bevorzugt mindestens ein LKW-Anhängermagnetventil, umfasst,
wobei eine Fluidverbindung zwischen einer Primärdruckfluidquelle, dem LKW-Feststellbremsversorgungsanschluss (120) und/oder der Anhänger-Steuerleitungsanschluss (180) über das mindestens eine LKW-Anhängerventil (170) bereitstellbar ist, sodass ein vergleichbarer Fluiddruck an dem Anhänger-Steuerleitungsanschluss (180) oder an dem LKW-Feststellbremsen-Versorgungsanschluss (120) oder an beiden davon (120; 180) gleichzeitig angelegt werden kann.

4. Bremssystem (100) nach einem der vorstehenden Ansprüche,
**dadurch gekennzeichnet, dass**
das mindestens eine Sekundärversorgungsventil (140) als Magnetventil, insbesondere als federbelastetes Magnetventil, bereitgestellt wird,
wodurch das mindestens eine Sekundärversorgungsventil (140) in seinem deaktivierten Zustand bevorzugt eine Fluidverbindung zwischen dem Sekundärversorgungsanschluss (130) und dem Steuerventil (150) unterbricht.

5. Bremssystem (100) nach einem der vorstehenden Ansprüche,
**dadurch gekennzeichnet, dass**
das Bremssystem (100) eine Sensoreinheit (160) zum Erfassen eines Fluiddrucks in der Fluidverbindung zwischen dem LKW-Feststellbremsen-Versorgungsanschluss (120) und dem Steuerventil (150) umfasst.

6. Bremssystem (100) nach einem der vorstehenden Ansprüche,
**dadurch gekennzeichnet, dass**
das Sekundärversorgungsventil (140) als externes Ventil bereitgestellt wird, insbesondere um über eine analoge Steuerverbindung gesteuert zu werden, oder als integraler Bestandteil des Bremssystems (100), insbesondere als integraler Bestandteil einer elektronischen Feststellbremssteuerung oder eines global skalierbaren Luftaufbereitungssystems, bereitgestellt wird.

7. Bremssystem (100) nach einem der vorstehenden Ansprüche,
**dadurch gekennzeichnet, dass**
der Sekundärversorgungsanschluss (130) ein Anhängertank-Versorgungsanschluss ist und/oder eine Fluidverbindung zu einem Anhängertank als sekundäre Druckfluidquelle umfasst.

8. Fahrzeugkombination, insbesondere LKW-Anhängerkombination, mit einem Bremssystem (100) nach einem der vorstehenden Ansprüche.

9. Verfahren (200) zum Betreiben eines Bremssystems (100) und/oder eine Fahrzeugkombination nach einem der vorstehenden Ansprüche, umfassend die folgenden Schritte:
- Überprüfen (210) des Fluiddrucks zwischen dem LKW-Feststellbremsen-Versorgungsanschluss (120) und dem Steuerventil (150);
- Erkennen (220) eines Fluidlecks, insbesondere eines Fluiddruckverlustes unter einen vorbestimmbaren Schwellenwert, zwischen dem LKW-Feststellbremsen-Versorgungsanschluss (120) und dem Steuerventil (150);
- Schalten (230), insbesondere Aktivieren, des mindestens einen Sekundärversorgungsventils (140), sodass eine Fluidverbindung zwischen dem Sekundärversorgungsanschluss (130) und dem Steuerventil (150) bereitgestellt wird;
wobei Druckfluid vom Sekundärversorgungsanschluss (130) des Bremssystems (100) über das Steuerventil (150) der LKW-Feststellbremskammer (110) bereitgestellt werden kann.

10. Verfahren (200) nach Anspruch 9,
**dadurch gekennzeichnet, dass**
der Schritt des Überprüfens (210) des Fluiddrucks mindestens ausgeführt, wenn dem LKW-Feststellbremsen-Versorgungsanschluss (120) Druckfluid bereitgestellt wird.

11. Verfahren (200) nach Anspruch 9 oder 10,
**dadurch gekennzeichnet, dass**
das LKW-Anhängerventil (170) anschließend oder gleichzeitig mit dem Schalten (230) des mindestens einen Sekundärversorgungsventils (140) geschaltet (240) wird, sodass eine Fluidverbindung zwischen der primären Druckfluidquelle und dem LKW-Feststellbremsen-Versorgungsanschluss (120) und/oder dem Anhängersteuerleitungsanschluss (180) eingerichtet ist, um dem Anhängersteuerleitungsanschluss (180) einen Fluiddruck bereitzustellen, insbesondere um eine Anhängerbetriebsbremse (190) zu lösen.

12. Verfahren (200) nach einem der Ansprüche 9 bis 11,
**dadurch gekennzeichnet, dass**
das Sekundärversorgungsventil (140) geschaltet, bevorzugt aktiviert wird, um über das Steuerventil (150) eine Fluidverbindung zwischen dem Sekundärversorgungsanschluss (130) und der LKW-Feststellbremskammer (110) bereitzustellen,
- wenn ein Fluiddruck zwischen dem LKW-Feststellbremsen-Versorgungsanschluss (120) und dem Steuerventil (150) niedriger als ein vorbestimmbarer Schwellenwert, insbesondere niedriger als ein Anpressdruck-Schwellenwert ist, oder
- wenn ein vorbestimmbarer Schwellenwert des Fluiddrucks nicht innerhalb eines vorbestimmbaren Zeitbereichs bereitstellbar ist.

13. Verfahren (200) nach Anspruch 9 bis 12,
**dadurch gekennzeichnet, dass**
der vorbestimmbare Schwellenwert des Fluiddrucks etwa 8 bar beträgt.

## Revendications

1. Système de freinage (100) pour une combinaison remorque-véhicule, en particulier pour un système de commande de frein de stationnement électronique ou un système de traitement d'air évolutif global d'une combinaison remorque-véhicule,
comprenant au moins une chambre de freinage de stationnement de camion (110), au moins un orifice d'alimentation de freinage de stationnement de camion (120), au moins un orifice d'alimentation secondaire (130), au moins une vanne d'alimentation secondaire (140) et au moins une vanne de commande (150), de préférence une vanne de sélection haute,
dans lequel la vanne de commande (150) comprend un raccordement fluidique à la au moins une chambre de freinage de stationnement de camion (110), à la au moins une vanne d'alimentation secondaire (130) et à l'orifice d'alimentation de freinage de stationnement de camion (120),
**caractérisé en ce que**
la au moins une vanne d'alimentation secondaire (140) comprend un raccordement fluidique à l'orifice d'alimentation secondaire (130) et à la vanne de commande (150),
dans lequel la au moins une vanne d'alimentation secondaire (140) comprend un raccordement fluidique à la au moins une chambre de freinage de stationnement de camion (110) par l'intermédiaire de la vanne de commande (150) de telle sorte que la au moins une chambre de freinage de stationnement de camion (110) puisse être alimentée en fluide sous pression par l'intermédiaire de l'orifice d'alimentation de freinage de stationnement de camion (120) et/ou l'orifice d'alimentation secondaire (130), de préférence pour permettre l'alimentation en fluide sous pression à partir d'une source de fluide sous pression primaire par l'intermédiaire de l'orifice d'alimentation de freinage de stationnement de camion (120) et/ou d'une source de fluide sous pression secondaire par l'intermédiaire de l'orifice d'alimentation secondaire (140) à la au moins une chambre de freinage de stationnement de camion (110).

2. Système de freinage (100) selon la revendication 1,
**caractérisé en ce que**
l'orifice d'alimentation de freinage de stationnement de camion (120) et l'orifice d'alimentation secondaire (130) sont aptes à alimenter en fluide sous pression la chambre de freinage de stationnement de camion (110) à partir de sources de fluide sous pression différentes, en particulier redondantes, de préférence à partir d'une source de fluide sous pression primaire et d'une source de fluide sous pression secondaire.

3. Système de freinage (100) selon l'une des revendications précédentes,
**caractérisé en ce que**
le système de freinage (100) comprend en outre un orifice de conduite de commande de remorque (180) pour alimenter en fluide sous pression un frein de service de remorque (190), et au moins une vanne camion-remorque (170), de préférence au moins une électrovanne camion-remorque,
dans lequel un raccordement fluidique entre une source de fluide sous pression primaire, l'orifice d'alimentation de freinage de stationnement de camion (120) et/ou l'orifice de conduite de commande de remorque (180) peut être fournie par l'intermédiaire de la au moins une vanne camion-remorque (170) de telle sorte qu'au moins une pression de fluide comparable puisse être appliquée à l'orifice de conduite de commande de remorque (180) ou à l'orifice d'alimentation de freinage de stationnement de camion (120) ou aux deux (120 ; 180) simultanément.

4. Système de freinage (100) selon l'une des revendications précédentes,
**caractérisé en ce que**
la au moins une vanne d'alimentation secondaire (140) est fournie sous la forme d'une électrovanne, en particulier sous la forme d'une électrovanne à ressort,
selon lequel la au moins une vanne d'alimentation secondaire (140) dans son état désactivé interrompt de préférence le raccordement fluidique entre l'orifice d'alimentation secondaire (130) et la vanne de commande (150).

5. Système de freinage (100) selon l'une des revendications précédentes,
**caractérisé en ce que**
le système de freinage (100) comprend une unité de capteur (160) pour la détection d'une pression de fluide dans le raccordement fluidique entre l'orifice d'alimentation de frein de stationnement de camion (120) et la vanne de commande (150).

6. Système de freinage (100) selon l'une des revendications précédentes,
**caractérisé en ce que**
la vanne d'alimentation secondaire (140) est fournie sous la forme d'une vanne externe, en particulier pour être commandée par l'intermédiaire d'un raccordement de commande analogique, ou fournie comme partie intégrante du système de freinage (100), en particulier comme partie intégrante d'un système de commande de freinage de stationnement électronique ou d'un système de traitement d'air évolutif global.

7. Système de freinage (100) selon l'une des revendications précédentes,
**caractérisé en ce que**
l'orifice d'alimentation secondaire (130) est un orifice d'alimentation de réservoir de remorque et/ou comprend un raccordement fluidique à un réservoir de remorque comme source de fluide sous pression secondaire.

8. Combinaison de véhicules, en particulier combinaison camion-remorque, avec un système de freinage (100) selon l'une des revendications précédentes.

9. Procédé (200) de fonctionnement d'un système de freinage (100) et/ou d'une combinaison de véhicules selon l'une des revendications précédentes, comprenant les étapes suivantes :
- la vérification (210) de la pression de fluide entre l'orifice d'alimentation de freinage de stationnement de camion (120) et la vanne de commande (150) ;
- la détection (220) d'une fuite de fluide, en particulier d'une perte de pression de fluide en dessous d'une valeur seuil prédéterminée, entre l'orifice d'alimentation de freinage de stationnement de camion (120) et la vanne de commande (150) ;
- la commutation (230), en particulier l'activation, de la au moins une vanne d'alimentation secondaire (140) de sorte qu'un raccordement fluidique entre l'orifice d'alimentation secondaire (130) et la vanne de commande (150) soit assurée ;
dans lequel le fluide sous pression peut être fourni depuis l'orifice d'alimentation secondaire (130) du système de freinage (100) par l'intermédiaire de la soupape de commande (150) à la chambre de freinage de stationnement de camion (110).

10. Procédé (200) selon la revendication 9,
**caractérisé en ce que**
l'étape de vérification (210) de la pression de fluide est au moins exécutée lorsque du fluide sous pression est fourni à l'orifice d'alimentation de freinage de stationnement de camion (120).

11. Procédé (200) selon la revendication 9 ou 10,
**caractérisé en ce que**
la vanne camion-remorque (170) est commutée (240) ultérieurement ou simultanément à la commutation (230) de la au moins une vanne d'alimentation secondaire (140) de telle sorte qu'un raccordement fluidique entre la source de fluide sous pression primaire, l'orifice d'alimentation de freinage de stationnement de camion (120) et/ou l'orifice de conduite de commande de remorque (180) soit établi afin de fournir une pression de fluide à l'orifice de conduite de commande de remorque (180), en particulier pour libérer un freinage de service de remorque (190).

12. Procédé (200) selon l'une des revendications 9 à 11,
**caractérisé en ce que**
la vanne d'alimentation secondaire (140) est commutée, de préférence activée, pour fournir un raccordement fluidique entre l'orifice d'alimentation secondaire (130) et la chambre de freinage de stationnement de camion (110) par l'intermédiaire de la vanne de commande (150)
- lorsqu'une pression de fluide entre l'orifice d'alimentation de freinage de stationnement de camion (120) et la vanne de commande (150) est inférieure à une valeur seuil prédéterminée, en particulier inférieure à un seuil de pression de contact, ou
- lorsqu'une valeur seuil prédéterminée de pression de fluide n'est pas disponible dans une plage de temps prédéterminée.

13. Procédé (200) selon les revendications 9 à 12,
**caractérisé en ce que**
la valeur seuil prédéterminée de la pression de fluide est d'environ 8 bars.
